(19) **Europäisches Patentamt**
**European Patent Office**
**Office européen des brevets**

(11) **EP 4 015 593 A1**

(12) **EUROPEAN PATENT APPLICATION**
published in accordance with Art. 153(4) EPC

(43) Date of publication:
**22.06.2022 Bulletin 2022/25**

(21) Application number: **18861645.2**

(22) Date of filing: **27.09.2018**

(51) International Patent Classification (IPC):
***C09J 7/00*** (2018.01)          ***C09J 201/00*** (2006.01)

(52) Cooperative Patent Classification (CPC):
**C09J 7/00; C09J 201/00**

(86) International application number:
**PCT/JP2018/036041**

(87) International publication number:
**WO 2019/065877 (04.04.2019 Gazette 2019/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **29.09.2017   JP 2017192138**

(71) Applicant: **Nitto Denko Corporation**
**Ibaraki-shi, Osaka 567-8680 (JP)**

(72) Inventors:
• **TAKASHIMA, Atsushi**
 **Ibaraki-shi**
 **Osaka 567-8680 (JP)**

• **MAKIHATA, Yosuke**
 **Ibaraki-shi**
 **Osaka 567-8680 (JP)**
• **MIZUHARA, Ginji**
 **Ibaraki-shi**
 **Osaka 567-8680 (JP)**

(74) Representative: **Gill Jennings & Every LLP**
**The Broadgate Tower**
**20 Primrose Street**
**London EC2A 2ES (GB)**

(54) **ADHESIVE ARTICLE**

(57)    The present invention relates to an adhesive article that expresses adhesiveness by stretching. The adhesive article includes an aggregate of a plurality of cohesive particles and each of the plurality of cohesive particles is a polymer particle having a core-shell structure including an adhesive core and a non-adhesive shell covering the core.

EP 4 015 593 A1

**Description**

TECHNICAL FIELD

The present invention relates to an adhesive article, and in more detail, an adhesive article that expresses adhesiveness by stretching.

BACKGROUND ART

Adhesive sheets and adhesive tapes are used in, for example, adhesion of various adherends such as a metal, a glass, a wood, a paper, a corrugated cardboard and a plastic material. Such adhesive sheets are that its adhesive surface is generally protected with a separator (release sheet) in order to protect the adhesive surface until sticking to an adherend. Furthermore, in the case of a rolled form such as a rolled adhesive tape, a substrate in which a back surface contacting an adhesive surface was subjected to a release treatment is used in order to facilitate rewinding.

However, in an adhesive sheet using a separator, the separator to be peeled when using is disposed after peeling. For this reason, the use of a separator is undesirable from the standpoints of resource saving and cost reduction. Furthermore, in case where a user uses an adhesive sheet or an adhesive tape while wearing globes or in case where an adhesive sheet or adhesive tape to be used has a small size, there is a problem that workability when peeling a separator from an adhesive sheet or when rewinding an adhesive tape is poor. Therefore, it is considered to be useful if an adhesive sheet or adhesive tape that does not require a separator and a release treatment of a back surface of a substrate can be provided.

As the adhesive sheet, Patent Literature 1 describes a heat-sensitive adhesive composition useful in an adhesive tape and an adhesive sheet, that has low adhesiveness at ordinary temperature and on the other hand, expresses adhesiveness when heated, and a heat-sensitive adhesive sheet having an adhesive layer containing the heat-sensitive adhesive composition.

CITATION LIST

PATENT LITERATURE

Patent Literature 1: JP-A-10-231464

SUMMARY OF INVENTION

TECHNICAL PROBLEM

However, the heat-sensitive adhesive sheet as described in Patent Literature 1 expresses adhesiveness by heating, and therefore has the following problems. Firstly, a heat source for expressing adhesiveness in the heat-sensitive adhesive sheet is required. Secondary, the heat-sensitive adhesive sheet is difficult to be used under the use environment such that heat is applied thereto after sticking to an adherend, that is, storage stability is poor. Thirdly, in the case where adhesiveness is expressed by heating in the state that the heat-sensitive adhesive sheet is brought into contact with an adherend, the heat-sensitive adhesive sheet is difficult to apply to an adherend that is weak to heat. Fourthly, in the case where the heat-sensitive adhesive sheet has a form of an adhesive sheet (adhesive tape) having a substrate, a substrate that is weak to heat is difficult to be used.

In view of the above problems, the present invention has an object to provide an adhesive article capable of expressing adhesiveness by simple operation when used while substantially having non-adhesiveness in the initial state and capable of using under various conditions.

SOLUTION TO PROBLEM

One embodiment of the present invention relates to an adhesive article which expresses adhesiveness by stretching, wherein the adhesive article includes an aggregate of a plurality of cohesive particles and each of the plurality of cohesive particles is a polymer particle having a core-shell structure including an adhesive core and a non-adhesive shell covering the core.

In one embodiment of the present invention, the adhesive article has a sheet shape.

In one embodiment of the present invention, the adhesive article further includes a substrate, and a layer containing the aggregate of the plurality of cohesive particles is provided on at least one surface of the substrate.

In one embodiment of the present invention, it is preferable that a tack value of the adhesive article after stretching to twice measured by the following probe tack test 2 is 20 gf or more larger than a tack value before stretching measured by the following probe tack test 1.

(Probe tack test 1)

After a stainless steel probe (SUS304) having a dimeter of 5 mm has been brought into contact with the surface of the adhesive article with a contact load of 50 gf under an environment of measurement temperature of 23°C, a load applied to the probe when separating 1 mm in a rate of 30 mm/min is measured with time, and a maximum load required when peeling is obtained.

(Probe tack test 2)

After the adhesive article has been stretched in a lengthwise direction and then a stainless steel probe (SUS304) having a dimeter of 5 mm has been brought into contact with the surface of the adhesive article with a contact load of 50 gf under an environment of measurement temperature of 23°C, a load applied to the probe when separating 1 mm in a rate of 30 mm/min is measured with time, and a maximum load required when peeling is obtained.

In one embodiment of the present invention, the adhesive article has a linear shape.

In one embodiment of the present invention, the adhesive article further includes a linear core material and a surface in a longitudinal direction of the core material is covered with a layer containing the aggregate of the plurality of cohesive particles.

In one embodiment of the present invention, it is preferable that a tack value of the adhesive article after stretching to twice measured by the following probe tack test 4 is 1 gf or more larger than a tack value before stretching measured by the following probe tack test 3.

(Probe tack test 3)

After a stainless steel probe (SUS304) having a dimeter of 2 mm has been brought into contact with the surface of the adhesive article with a contact load of 50 gf under an environment of measurement temperature of 23°C, a load applied to the probe when separating 1 mm in a rate of 30 mm/min is measured with time, and a maximum load required when peeling is obtained.

(Probe tack test 4)

After the adhesive article has been stretched in a lengthwise direction under an environment of measurement temperature of 23°C and a stainless steel probe (SUS304) having a dimeter of 2 mm has been brought into contact with the surface of the adhesive article with a contact load of 50 gf, a load applied to the probe when separating 1 mm in a rate of 30 mm/min is measured with time, and a maximum load required when peeling is obtained.

ADVANTAGEOUS EFFECTS OF INVENTION

The adhesive article according to one embodiment of the present invention is substantially non-adhesive in the initial state and therefore does not require a separator and a release treatment. Furthermore, the adhesive article can express adhesiveness by simple operation and therefore has excellent workability. Additionally, the adhesive article can be used under various conditions.

BRIEF DESCRIPTION OF DRAWINGS

Fig. 1 is a schematic cross-sectional view of one configuration example of a sheet-shaped adhesive article.
Fig. 2 is a schematic cross-sectional view of one configuration example of a linear adhesive article.

DESCRIPTION OF EMBODIMENTS

The embodiments of the present invention are described in detail below.

In the following drawings, members and portions having the same action are sometimes explained by allotting the reference signs to those, and the duplicating descriptions are sometimes omitted or simplified. Furthermore, the embodiments shown in the drawings are schematically shown in order to clearly describe the present invention, and a size and a scale of the actual product are not always correctly shown.

Furthermore, in the present description, the proportion (percentage, parts and the like) based on mass is the same as the proportion (percentage, parts and the like) based on weight.

The adhesive article according to an embodiment of the present invention is an adhesive article that expresses adhesiveness by stretching, wherein the adhesive article contains an aggregate of a plurality of cohesive particles and each of a plurality of cohesive particles is a polymer particle having a core-shell structure including an adhesive core and a non-adhesive shell covering the core.

The adhesive article of this embodiment contains at least an aggregate of a plurality of cohesive particles. Each of a plurality of cohesive particles is a polymer particle having a core-shell structure including an adhesive core and a non-adhesive shell covering the core (hereinafter sometimes referred to as a core-shell polymer particle). The shell of the core-shell polymer particle is typically arranged by covering the entire outer surface of the core, and the invention is not limited to this. In other words, the particle in which at least a part of a region of the outer surface of the core is covered with the shell may be included in the concept of the core-shell polymer particle used herein and can be included in the adhesive article as long as the adhesive article in the initial state is substantially non-adhesive.

A polymer having adhesiveness (adhesive component) is used in the adhesive core that constitutes the core-shell polymer particle. The polymer that can be used as such a core material includes various polymers such as an acrylic polymer, a rubber polymer, a polyester polymer, a urethane polymer, a polyether polymer, a silicone polymer, a polyamide polymer and a fluorine polymer. Those polymers can be used in one kind alone or by combining two or more kinds. Above all, from the standpoint of adhesiveness, an acrylic polymer and a rubber polymer are preferably used, and an acrylic polymer is particularly preferably used.

A non-adhesive polymer (non-adhesive component) is used in the non-adhesive shell that constitutes the core-shell polymer particle. The polymer that can be used as such a shell material includes various polymers such as an acrylic polymer, a silicone polymer and a urethane polymer. Those polymers can be used in one kind alone or by combining two or more kinds. Above all, an acrylic polymer can be particularly preferably used from the standpoint of productivity (cost is low, high base product is easy to be obtained, and the like).

An example of a core-shell structured acrylic copolymer particle in which the core contains an acrylic polymer (A) and the shell contains an acrylic polymer (B) is described below as one example of the core-shell polymer particle that can be used in the adhesive article of this embodiment, but this embodiment is not limited thereto.

In the present description, the term "(meth)acryloyl" has the meaning comprehensively indicating acryloyl and methacryloyl. Similarly, the term "(meth)acrylate" has the meaning comprehensively indicating acrylate and methacrylate and the term "(meth)acryl" has the meaning comprehensively indicating acryl and methacryl.

As the acrylic polymer (B) that constitutes the shell of the core-shell structured acrylic copolymer particle, an acrylic copolymer in which a main monomer unit is methyl methacrylate, butyl methacrylate, i-butyl methacrylate, t-butyl methacrylate, isobornyl (meth)acrylate, cyclohexyl acrylate or the like may be preferable. Above all, an acrylic copolymer (B1) in which a main monomer unit is methyl methacrylate is preferred, and specific examples thereof includes an acrylic copolymer (B 1-1) containing methyl methacrylate and a carboxyl group-containing monomer as monomer units and an acrylic copolymer (B1-2) containing methyl methacrylate, carboxyl group-containing monomer and (meth)acrylic acid $C_{2-14}$ alkyl ester as monomer units.

The carboxyl group-containing monomer is not particularly limited, and examples thereof include (meth)acrylic acid, carboxyethyl (meth)acrylate, carboxypentyl (meth)acrylate, itaconic acid, maleic acid, fumaric acid and crotonic acid. Above all, acrylic acid and/or methacrylic acid are preferred, and concurrent use of acrylic acid and methacrylic acid is more preferred. In the case of concurrently using acrylic acid and methacrylic acid, a ratio of amounts thereof is not particularly limited, but those are preferably used in nearly the same amounts. The carboxyl group-containing monomer can be used in one kind or two or more kinds.

In (meth)acrylic acid $C_{2-14}$ alkyl ester, an alkyl group having 2 to 14 carbon atoms may be straight chain and may be branched chain, and examples thereof include ethyl (meth)acrylate, propyl (meth)acrylate, isopropyl (meth)acrylate, n-butyl (meth)acrylate, isobutyl (meth)acrylate, s-butyl (meth)acrylate, t-butyl (meth)acrylate, pentyl (meth)acrylate, isopentyl (meth)acrylate, hexyl (meth)acrylate, heptyl (meth)acrylate, octyl (meth)acrylate, cyclohexyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate and tetradecyl (meth)acrylate. The (meth)acrylic acid $C_{2-14}$ alkyl ester is preferably acrylic acid $C_{2-12}$ alkyl ester, more preferably acrylic acid $C_{4-8}$ alkyl ester and particularly preferably n-butyl acrylate.

The acrylic copolymer (B1) contains methyl methacrylate in an amount of preferably 50 to 99% by weight, more preferably 60 to 90% by weight and particularly preferably 60 to 70% by weight, in the whole monomer units.

The composition of the acrylic copolymer (B1-1) containing methyl methacrylate and a carboxyl group-containing monomer as monomer units is that methyl methacrylate : carboxyl group-containing monomer (weight ratio) is preferably 80 to 99 : 20 to 1, more preferably 80 to 95 : 20 to 5 and particularly preferably 85 to 95 : 15 to 5. The composition of the acrylic copolymer (B1-2) containing methyl methacrylate, a carboxyl group-containing monomer and (meth)acrylic

acid $C_{2-14}$ alkyl ester, as monomer units is that methyl methacrylate : carboxyl group-containing monomer : (meth)acrylic acid $C_{2-14}$ alkyl ester (weight ratio) is preferably 50 to 98 : 1 to 20 : 1 to 30 (provided that the total weight of three components is 100) and more preferably 60 to 90 : 5 to 20 : 5 to 20 (provided that the total weight of three components is 100).

The acrylic copolymers (B1) and (B1-1) each can contain methacrylic acid $C_{2-18}$ alkyl ester and a hydroxyl group-containing monomer as monomer units in a range of 10% by weight or less in the whole monomer units. The acrylic copolymer (B1-2) can contain methacrylic acid $C_{15-18}$ alkyl ester and a hydroxyl group-containing monomer as monomer units in a range of 10% by weight or less in the whole monomer units.

Examples of the hydroxyl group-containing monomer include hydroxyethyl (meth)acrylate, hydroxybutyl (meth)acrylate, hydroxyhexyl (meth)acrylate, hydroxyoctyl (meth)acrylate, hydroxydecyl (meth)acrylate, hydroxylauryl (meth)acrylate and (4-hydroxymethylcyclohexyl) methyl methacrylate.

The glass transition temperature of the acrylic polymer (B) that forms the shell of the core-shell structured acrylic copolymer particles is not particularly limited, but is preferably 5°C or higher and more preferably 10°C or higher, in order to show good non-adhesiveness. The upper limit of the glass transition temperature is not particularly limited, but is, for example, 150°C or lower from the standpoint of film formability.

In the present description, the glass transition temperature (°C) of the acrylic polymer (B) is obtained by converting a theoretical glass transition temperature (K) calculated from the following Fox equation from monomer units that constitute the acrylic polymer (B) and the respective proportions into degree Celsius (°C).

Fox equation:

$$1/Tg = W_1/Tg_1 + W_2/Tg_2 + \cdots + W_n/Tg_n$$

Tg: glass transition temperature (K) of polymer

$Tg_1$, $Tg_2$, $\cdots$ $Tg_n$ : glass transition temperature (K) of homopolymer of each monomer

$W_i$, $W_2$, $\cdots$ $W_n$ : weight fraction of each monomer

Theoretical glass transition temperature obtained from Fox equation (converted into degree Celsius (°C)) well consists with the measured glass transition temperature obtained by differential scanning calorimetry (DSC), dynamic viscoelasticity or the like.

The shell of the core-shell structured acrylic copolymer particle may contain a polymer other than the acrylic polymer (B), in addition to the acrylic polymer (B). In this case, the proportion of the acrylic polymer (B) is preferably 50% by weight or more and more preferably 70% by weight or more, based on the whole polymers that form the shell.

As the acrylic polymer (A) that forms the core of the core-shell structured acrylic copolymer, a homopolymer or copolymer containing one kind or two or more kinds selected from (meth)acrylic acid $C_{1-14}$ alkyl esters as a main monomer unit may be preferable.

The (meth)acrylic acid $C_{1-14}$ alkyl ester includes methyl (meth)acrylate, ethyl (meth)acrylate, propyl (meth)acrylate, isopropyl (meth)acrylate, n-butyl (meth)acrylate, isobutyl (meth)acrylate, s-butyl (meth)acrylate, t-butyl (meth)acrylate, pentyl (meth)acrylate, isopentyl (meth)acrylate, hexyl (meth)acrylate, heptyl (meth)acrylate, octyl (meth)acrylate, cyclohexyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate and tetradecyl (meth)acrylate.

The (meth)acrylic acid $C_{1-14}$ alkyl ester is preferably acrylic acid $C_{1-14}$ alkyl ester, more preferably acrylic acid $C_{i-io}$ alkyl ester, still more preferably acrylic acid $C_{2-8}$ alkyl ester and particularly preferably acrylic acid $C_{4-8}$ alkyl ester.

The homopolymer or copolymer containing one kind or two or more kinds selected from (meth)acrylic acid $C_{1-14}$ alkyl esters as a main monomer unit may be a copolymer further containing a carboxyl group-containing monomer or a hydroxyl group-containing monomer as monomer unit(s). Specific examples of the "carboxyl group-containing monomer" and the "hydroxyl group-containing monomer" include the monomers exemplified as monomer units of the acrylic acid polymer (B) described above.

The glass transition temperature of the acrylic polymer (A) that forms the core of the core-shell structured acrylic acid copolymer particle is not particularly limited, but is preferably 0°C or lower and more preferably -20°C or lower, in order to show good adhesiveness. The "glass transition temperature of the acrylic polymer (A)" used herein is obtained by converting a theoretical glass transition temperature (K) calculated from Fox equation described above from monomer units that constitute the acrylic polymer (A) and the respective proportions into degree Celsius (°C).

Preferred specific examples of the acrylic polymer (A) include a homopolymer of n-butyl acrylate (BA), a homopolymer of n-hexyl acrylate (HA), a homopolymer of 2-ethylhexyl acrylate (2EHA), and a copolymer comprising two or more kinds selected from BA, HA and 2EHA as monomer units.

The core of the core-shell structured acrylic copolymer particle may contain a polymer other than the acrylic copolymer (A), in addition to the acrylic polymer (A). In this case, the proportion of the acrylic polymer (A) to the whole polymers that form the core is preferably 50% by weight or more and more preferably 70% by weight or more, from the standpoint of adhesiveness.

One production example of the polymer particle having core-shell structure (core-shell polymer particle) is described below, but the production is not limited to this.

In this production example, emulsion polymerization for forming a polymer for constituting the core of the core-shell polymer particle is firstly conducted. The emulsion polymerization can be conducted by the conventional method. Specifically, an emulsifier (surfactant), a radical polymerization initiator, a chain transfer agent as necessary, and the like are appropriately mixed together with a monomer for constituting a monomer unit of a polymer for constituting a core (core forming monomer), and emulsion polymerization is conducted by the conventional emulsion polymerization method such as a batch preparation method (batch polymerization method), a monomer dropping method or a monomer emulsion dropping method. In the monomer dropping method, continuous dropping or divided dropping is appropriately selected. Reaction conditions of the emulsion polymerization for obtaining a polymer for constituting a core are appropriately selected. As an example, in the case of using an acrylic monomer, the polymerization temperature is, for example, preferably about 40 to 95°C, and the polymerization time is preferably about 30 minutes to 24 hours.

In the emulsion polymerization, for example, various non-reactive surfactants generally used in emulsion polymerization are used as the emulsifier. For example, an anionic non-reactive surfactant and a nonionic non-reactive surfactant are used as the non-reactive surfactant. Specific examples of the anionic non-reactive surfactant include higher fatty acid salts such as sodium oleate; alkyl aryl sulfonates such as sodium dodecylbenzene sulfonate; alkyl sulfuric ester salts such as sodium lauryl sulfate and ammonium lauryl sulfate; polyoxyethylene alkyl ether sulfuric ester salts such as polyoxyethylene lauryl ether sodium sulfate; polyoxyethylene alkyl aryl ether sulfuric ester salts such as polyoxyethylene nonyl phenyl ether sodium sulfate; alkyl sulfosuccinic ester salt and its derivatives such as monooctyl sodium sulfosuccinate, dioctyl sodium sulfosuccinate or polyoxyethylene lauryl sodium sulfosuccinate; and polyoxyethylene distyrenated phenyl ether sulfuric ester salts. Specific examples of the nonionic non-reactive surfactant include polyoxyethylene alkyl ethers such as polyoxyethylene lauryl ether or polyoxyethylene stearyl ether; polyoxyethylene alkyl phenyl ethers such as polyoxyethylene octyl phenyl ether or polyoxyethylene nonyl phenyl ether; sorbitan higher fatty acid esters such as sorbitan monolaurate, sorbitan monostearate or sorbitan trioleate; polyoxyethylene sorbitan higher fatty acid esters such as polyoxyethylene sorbitan monolaurate; polyoxyethylene higher fatty acid esters such as polyoxyethylene monolaurate or polyoxyethylene monostearate; glycerin higher fatty acid esters such as oleinic acid monoglyceride or stearic acid acid monoglyceride; polyoxyethylene-polyoxypropylene block copolymer and polyoxyethylene distyrenated phenyl ether.

Other than the non-reactive surfactant, a reactive surfactant having a radial polymerizable functional group pertaining to an ethylenically unsaturated bond can be used as the surfactant. Examples of the reactive surfactant include an anionic reactive surfactant containing the anionic non-reactive surfactant having incorporated therein a radial polymerizable functional group such as a propenyl group or an allyl ether group, and a nonionic reactive surfactant containing the nonionic non-reactive surfactant having incorporated therein a radial polymerizable functional group such as a propenyl group or an allyl ether group. The emulsifier can be used in one kind or two or more kinds.

Specific examples of the anionic reactive surfactant include alkyl ether type (as commercially available products, for example, AQUARON KH-05, KH-10 and KH-20 manufactured by DKS Co., Ltd., ADEKARIA SOAP SR-10N and SR-20N manufactured by ADEKA, LATEMUL PD-104 manufactured by Kao Corporation, and the like); sulfosuccinic ester type (as commercially available products, for example, LATEMUL S-120, S-120A, S-180P and S-180A manufactured by Kao Corporation, and ELEMINOL JS-20 manufactured by Sanyo Chemical Industries, Ltd.); alkyl phenyl ether type or alkyl phenyl ester type (as commercially available products, for example, AQUARON H-2855A, H-3855B, H-3855C, H-3856, HS-05, HS-10, HS-20, HS-30, HS-1025, BC-05, BC-10 and BC-20 manufactured by DKS Co., Ltd., and ADEKARIA SOAPSDX-222, SDX-223, SDX-232, SDX-233, SDX-259, SE-10N and SE-20N manufactured by ADEKA); (meth)acrylate sulfuric ester type (as commercially available products, for example, ANTOX MS-60 and MS-2N manufactured by Nippon Nyukazai Co., Ltd., and ELEMINOL RS-30 manufactured by Sanyo Chemical Industries, Ltd.); and phosphoric ester type (as commercially available products, for example, H-3330PL manufactured by DKS Co., Ltd., and ADEKARIA SOAP PP-70 manufactured by ADEKA).

The nonionic reactive surfactant includes alkyl ether type ((as commercially available products, for example, ADEKARIA SOAP ER-10, ER-20, ER-30 and ER-40 manufactured by ADEKA, and LATEMUL PD-420, PD-430 and PD-450 manufactured by Kao Corporation); alkyl phenyl ether type or alkyl phenyl ester type (as commercially available products, for example, AQUARON RN-10, RN-20, RN-30 and RN-50 manufactured by DKS Co., Ltd., and ADEKARIA SOAP NE-10, NE-20, NE-30 and NE-40 manufactured by ADEKA); and (meth)acrylate sulfuric ester type (as commercially available products, for example, RMA-565, RMA-568 and RMA-1114 manufactured by Nippon Nyukazai Co., Ltd.).

The radical polymerization initiator is not particularly limited and the conventional radical polymerization initiators that are generally used in emulsion polymerization can be used. The radical polymerization initiator includes an azo initiator such as 2,2'-azobisisobutyronitrile (AIBN), 2,2'-azobis(2-methylpropione amidine)disulfate, 2,2'-azobis(2-methylpropione amidine)dichloride, 2,2'-azobis(2-amidinopropane)dichloride or 2,2'-azobis[2-(2-imidazolin-2-yl)propane] dichloride; a persulfate initiator such s potassium persulfate or ammonium persulfate; a peroxide initiator such as benzoyl peroxide, t-butyl hydroperoxide or hydrogen peroxide; a substituted ethane initiator such as phenyl-substituted ethene; and a carbonyl initiator such as an aromatic carbonyl compound. Those initiators are appropriately used alone or as mixtures. In conducting the emulsion polymerization, a redox initiator that a reducing agent is used together with a polymerization initiator as desired can be used. This accelerates emulsion polymerization rate and makes it easy to conduct emulsion polymerization at low temperature. The reducing agent includes a reducing organic compound such as a metal salt of ascorbic acid, erythorbic acid, tartaric acid, citric acid, glucose or formaldehyde sulfoxylate; a reducing inorganic compound such as sodium thiosulfate, sodium sulfite, sodium bisulfite or sodium metabisulfite; ferrous chloride, Rongalit and thiourea dioxide.

The composition of the monomer emulsion in the emulsion polymerization is preferably a composition containing 0.5 to 6 parts by weight (preferably 1 to 4 parts by weight) of a surfactant and 40 to 80 parts by weight (preferably 45 to 60 parts by weight) of water, per 100 parts by weight of the monomer. The amounts of "surfactant" and "water" used herein each are the respective total amount of those contained in the monomer emulsion dropped and those contained in the monomer emulsion charged in the polymerization reaction vessel when the emulsion polymerization is a monomer emulsion dropping method.

After conducting the emulsion polymerization for forming a polymer for constituting the core as described above, a monomer for constituting a monomer unit of a polymer for constituting a shell is added to an aqueous dispersion containing the polymer for constituting the core, followed by conducting emulsion polymerization. Thus, an aqueous dispersion of the core-shell polymer particles can be obtained.

In the case of adding a monomer (shell forming monomer) for constituting a monomer unit of a polymer for constituting a shell to an aqueous dispersion containing a polymer for constituting the core, an emulsifier is not preferably added to the monomer. By this, polymer particles having a core-shell structure including an adhesive core covered with a non-adhesive shell, that constitute the adhesive article of this embodiment are easy to be formed. The reason for this is not always clear, but it is considered that the core-shell proportion is increased by the above. In other words, it is considered to be due to that the formation of particles formed of a homopolymer of the core-forming monomer and the formation of particles formed of a homopolymer of the shell-forming monomer are decreased.

When the shell-forming monomer is added to an aqueous dispersion containing a monomer for constituting the core, a radical polymerization initiator, a chain transfer agent or the like may be appropriately added as necessary together with the shell-forming monomer. In polymerizing, the conventional emulsion polymerization method such as a monomer dropping method, a monomer emulsion dropping method or a seed polymerization can be used. In the monomer dropping method, continuous dropping or divided dropping is appropriately selected. The reaction conditions are appropriately selected. As an example, in the case of using an acrylic monomer, the polymerization temperature is, for example, preferably about 40 to 95°C and the polymerization time is preferably about 30 minutes to 24 hours.

In addition, it is preferable to add, for example, an alkali such as ammonia water to an aqueous dispersion of the core-shell particles thus obtained, thereby adjusting pH to about 7.0 to 9.0, for the improvement of coating properties (application properties).

The content ratio ((C)/(S)) of a polymer (C) forming the core and a polymer (S) forming the shell, in the core-shell polymer particle is preferably 95/5 to 65/35 (weight ratio), more preferably 90/10 to 70/30 and particularly preferably 85/15 to 75/25. When the ratio ((C)/(S)) exceeds the preferable range and the proportion of the polymer (C) forming the core is large, initial adhesive force tends to be increased. On the other hand, when the proportion of the polymer (S) forming the shell is large, adhesive force tends to be difficult to express.

The adhesive article of this embodiment contains an aggregate of a plurality of cohesive particles (core-shell polymer particles). Furthermore, the adhesive article of this embodiment expresses adhesiveness by stretching and does not substantially has adhesiveness in the initial state before stretching, that is, is substantially non-adhesive.

The reason that the adhesive article of this embodiment expresses adhesiveness by stretching is not always clear, but it is assumed as follows. It is considered that at least a part of a plurality of the cohesive particles (core-shell particles) contained in the adhesive article of this embodiment becomes the state that shells of the adjacent core-shell particles are fused to each other by a drying step or the like after the polymerization reaction. When the adhesive article is stretched, stress is applied to a shell part mutually fused in the adjacent core-shell polymer particles, thereby causing break of the shell, and the adhesive core covered with the non-adhesive shell is exposed outside, thereby expressing adhesiveness.

The shape of the adhesive article of this embodiment is not particularly limited so long as it is a stretchable shape, and can have various shapes such as a sheet shape, a line shape, a mass shape, a bag shape, a tube shape, a honeycomb shape and a mesh shape. The adhesive article of this embodiment may be a substateless adhesive article constituted of an aggregate of a plurality of cohesive particles, but may be further provided with a substrate having properties according to the form of the adhesive article. In one embodiment, a layer containing an aggregate of a plurality of cohesive particles (hereinafter referred to as a cohesive particle layer) is provided on at least one surface of the substrate.

Example of a sheet-shaped adhesive article is described below. The term "sheet-shaped" used herein is the concept including shapes such as a tape shape, a film shape, a label shape and a roll shape, in addition to a sheet shape.

The sheet-shaped adhesive article can be a sheet-shaped substrateless adhesive article including a layer containing an aggregate of a plurality of cohesive particles. In the case of a sheet-shaped substrateless adhesive article, its thickness is not particularly limited. However, when the thickness is too small, the adhesive article may be broken when stretching. Therefore, the thickness is, for example, preferably 1 $\mu$m or more and more preferably 5 $\mu$m or more. On the other hand, when the thickness is too large, large stress may be required when stretching. Therefore, the thickness is, for example, preferably 100 $\mu$ or less and more preferably 50 $\mu$m or less.

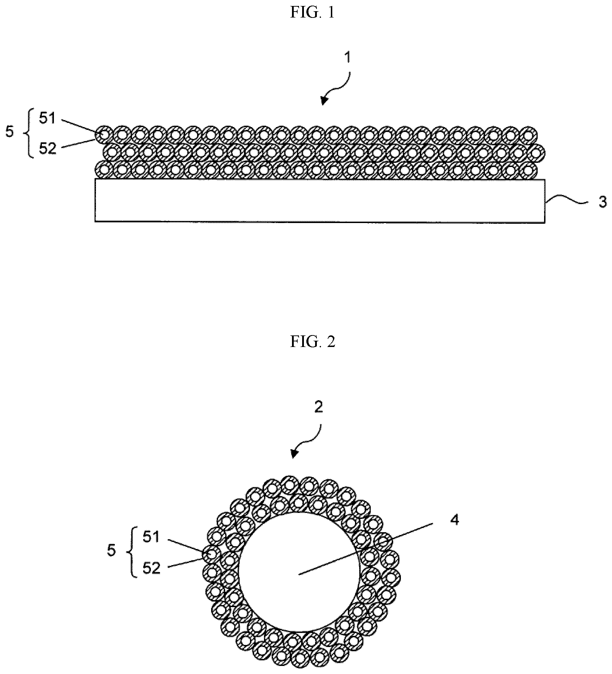

The sheet-shaped adhesive article may further include a substrate as a support. In the sheet-shaped adhesive article having a substrate, a layer containing an aggregate of a plurality of cohesive particles is provided on at least one surface of the substrate. Fig. 1 shows a schematic cross-sectional view of one configuration example of a sheet-shaped adhesive article having a substrate as a support.

In a sheet-shaped adhesive article 1 shown in Fig. 1, a layer containing an aggregate of a plurality of cohesive particles 5 (cohesive particle layer) is provided on one surface of a substrate 3 as a support. A plurality of the cohesive particles 5 each is a polymer particle having a core-shell structure including an adhesive core 51 and a non-adhesive shell 52 covering the core 51.

In the sheet-shaped adhesive article shown in Fig. 1, the cohesive particle layer is provided on only one surface of the substrate, but may be provided on both surfaces of the substrate. Furthermore, in the sheet-shaped adhesive article shown in Fig. 1, the cohesive particle layer is provided on the whole of the one surface of the substrate. However, the cohesive particle layer is not limited to this embodiment and may be provided on only a part of one or both surfaces of the substrate. The cohesive particle layer is typically continuously formed, but is not limited to this embodiment and may be formed regularly such as a dot shape or a stripe shape or in a random pattern.

The substrate used in the sheet-shaped adhesive article is not particularly limited so long as it does not disturb stretching of the adhesive article. A substrate composed of a material that is stretchable by itself is preferred, and for example, a resin film, a paper, a cloth, a rubber sheet, a foamed sheet and their composites (multilayer body) can be used. Examples of the resin film include polyolefin films such as polyethylene (PE), polypropylene (PP), an ethylene-propylene copolymer or an ethylene-vinyl acetate copolymer (EVA); polyester films such as polyethylene terephthalate (PET); urethane films such as urethane or acryl urethane; vinyl chloride resins; vinyl acetate resins; polyimide resin films; polyamide resin films; fluorine resin films; and cellophane. Examples of the paper include Japanese paper, kraft paper, glassine paper, wood free paper, synthetic paper and top coated layer. Examples of the cloth include woven fabric or nonwoven fabric composed of each of various fibrous materials or a mixture of various fibrous materials. Examples of the fibrous material include cotton, staple fiber, Manila hemp, pulp, rayon, acetate fiber, polyester fiber, polyvinyl alcohol fiber, polyamide fiber and polyolefin fiber. Examples of the rubber sheet include natural rubber sheet and a butyl rubber sheet. Examples of the foamed sheet include a foamed polyurethane sheet and a foamed polychloroprene sheet.

The non-woven fabric used herein has the concept indicating non-woven fabric for adhesive sheet mainly used in the fields of adhesive tapes and other adhesive tapes, and typically means non-woven fabric prepared using the general paper making machine (sometimes called "paper"). The resin film used herein is typically a nonporous resin sheet, and has a concept distinguished from, for example, non-woven fabric (that is, free of non-woven fabric). The resin film may be any of a non-stretched film, a uniaxially stretched film and a biaxially stretched film. Surface treatment such as application of a primer, a corona discharge treatment or a plasma treatment may be applied to the surface of the substrate.

Above all, a polyolefin film and a urethane film are preferably used from the standpoint of easy stretching.

The thickness of the substrate is not particularly limited and can be appropriately selected depending on the purpose. However, when the thickness is too small, the adhesive article may be broken when stretching. Therefore, the thickness is, for example, preferably 5 $\mu$m or more and more preferably 10 $\mu$m or more. On the other hand, when the thickness is too large, large stress may be required when stretching. Therefore, the thickness is, for example, preferably 100 $\mu$m or less and more preferably 50 $\mu$m or less.

As necessary, the substrate may contain various additives such as a filler (inorganic filler, organic filler or the like), an age resister, an antioxidant, an ultraviolet absorber, an antistatic agent, a lubricant, a plasticizer and a coloring agent (pigment, dye or the like). The conventional surface treatment such as corona discharge treatment, plasma treatment or application of a primer may be applied to the surface of the substrate.

In the case of the adhesive article having a sheet-shaped substrate as shown in Fig. 1, the thickness of the adhesive layer is not particularly limited. However, the thickness is, for example, preferably 1 $\mu$m or more and more preferably 3 $\mu$m or more, from the standpoint of adhesiveness. On the other hand, the thickness is, for example, 200 $\mu$m or less and more preferably 150 $\mu$m or less, from the standpoint of drying property.

The layer containing an aggregate of a plurality of cohesive particles (cohesive particle layer) may be directly provided on the surface of the substrate, but may be provided thereon through an adhesive layer. The adhesive constituting the adhesive layer is not particularly limited and the conventional adhesives can be used. The adhesive may be an acrylic adhesive, a rubber adhesive, a vinyl alkyl ether adhesive, a silicone adhesive, a polyester adhesive, a polyamide adhesive, a urethane adhesive, a fluorine adhesive and an epoxy adhesive. Above all, a rubber adhesive and an acrylic adhesive are preferred from the standpoint of adhesiveness, and an acrylic adhesive is particularly preferred. The adhesive may be used in one kind alone and may be used by combining two or more kinds. The adhesive in this embodiment is preferably a pressure-sensitive adhesive that has adhesiveness at normal temperatures and can attach an adherend to the surface thereof by a pressure caused on contact between the surface of the adhesive and the surface of the adherend. The pressure-sensitive adhesive does not require heating and therefore can be applied to an adherend that is weak to heat.

The acrylic adhesive contains, as a main ingredient, a polymer of monomers including (meth)acrylic acid alkyl ester such as ethyl acrylate, butyl acrylate, 2-ethylhexyl acrylate, isooctyl acrylate or isononyl acrylate as a main component, and a modifying monomer such as acrylonitrile, vinyl acetate, styrene, methyl methacrylate, acrylic acid, maleic anhydride, vinylpyrrolidone, glycidyl methacrylate, dimethyl aminoethyl methacrylate, hydroxy ethyl acrylate or acrylamide, added to the main ingredient as necessary.

The rubber adhesive contains a rubber polymer such as natural rubber, a styreneisoprene-styrene block copolymer, a styrene-butadiene-styrene block copolymer, a styrene-ethylene-butylene-styrene copolymer, a styrene-butadiene rubber, polybutadiene, polyisoprene, polyisobutylene, butyl rubber, chloroprene rubber or silicone rubber, as a main ingredient.

Tackifying resins such as rosin type, terpene type, styrene type, aliphatic petroleum type, aromatic petroleum type, xylene type, phenol type, coumarone indene type and their hydrogenated products, and additives such as a liquid resin, a liquid rubber, polybutene, a process oil, a softener such as dioctyl phthalate, an antioxidant, a filler, a pigment and a crosslinking agent can be appropriately added to those adhesives.

The thickness of the adhesive layer is not particularly limited and can be appropriately selected depending on the purpose. The thickness of the adhesive layer is generally about 1 to 200 $\mu$m and preferably about 3 to 150 $\mu$m.

In the present description, the term that the sheet-shaped adhesive article in the initial state (before stretching) "does not substantially have adhesiveness (is substantially non-adhesive)" indicates that a tack value on the surface of the adhesive article measured by the following probe tack test 1 is 5 gf or less. Furthermore, the term that the sheet-shaped adhesive article in the initial state (before stretching) "has adhesiveness" indicates that a tack value of the surface of the adhesive article measured by the following probe tack test 1 exceeds 5 gf. More specifically, the tack value is measured according to a probe tack measurement method described in the column of examples described hereinafter.

(Probe tack test 1)

After a stainless steel probe (SUS304) having a dimeter of 5 mm has been brought into contact with the surface of the adhesive article with a contact load of 50 gf under an environment of measurement temperature of 23°C, a load applied to a probe when separating 1 mm in a rate of 30 mm/min is measured with time, and a maximum load required when peeling is obtained.

In the present description, the term that the sheet-shaped adhesive article after stretching "does not substantially have adhesiveness (is substantially non-adhesive)" indicates that a tack value on the surface of the adhesive article measured by the following probe tack test 2 is 5 gf or less. Furthermore, the term that the adhesive article after stretching "has adhesiveness" indicates that a tack value on the surface of the adhesive article measured by the following probe tack test 2 exceeds 5 gf. More specifically, the tack value is measured according to a probe tack measurement method described in the column of examples described hereinafter.

(Probe tack test 2)

After the adhesive article has been stretched in a lengthwise direction and then a stainless steel probe (SUS304) having a dimeter of 5 mm has been brought into contact with the surface of the adhesive article with a contact load of 50 gf under an environment of measurement temperature of 23°C, a load applied to a probe when separating 1 mm in a rate of 30 mm/min is measured with time, and a maximum load required when peeling is obtained.

The term that the adhesive article "expresses adhesiveness by stretching" indicates that the adhesive article is substantially non-adhesive in the initial state before stretching and has adhesiveness after stretching.

In order that the expression of adhesiveness by stretching is better exhibited, the tack value after stretching to twice in a lengthwise direction of the sheet-shaped adhesive article is preferably 20 gf or more larger than the tack value before stretching, more preferably 30 gf or more larger than the tack value before stretching, and still more preferably 40 gf or more larger than the tack value before stretching.

From the same standpoint, the tack value after stretching to twice of the adhesive article is preferably 30 gf or more, more preferably 40 gf or more and still more preferably 50 gf or more. The upper limit of the tack value after stretching to twice is not particularly limited, but is, for example, 1000 gf or less from the standpoint of the balance with shear adhesive force.

Example of the linear adhesive article is described below. The term "linear" used herein has the concept including the state bendable in various directions at various angles like a yarn (hereinafter referred to as "yarnlike") in addition to a form of straight line, a form of curved line and a form of broken line.

The linear adhesive article can be a linear substrateless adhesive article containing an aggregate of a plurality of cohesive particles. In the case of the linear substrateless adhesive article, the shape and size of a cross-section thereof are not particularly limited. The cross-section shape thereof includes a circle, an ellipse and a rectangle such as a square. When the cross-sectional shape of the adhesive article is a circle, the diameter of its cross-section is not particularly limited. However, when the diameter is too small, the adhesive article may be broken when stretched. Therefore, the diameter is, for example, preferably 10 $\mu$m or more and more preferably 30 $\mu$m or more. On the other hand, when the diameter is too large, large stress may be required when stretching. Therefore, the diameter is, for example, preferably 2000 $\mu$m or less and more preferably 1000 $\mu$m or less.

The linear adhesive article may further include a linear core material as a support. In the linear adhesive article having a linear core material, the surface in a longitudinal direction of the core material is covered with a layer containing an aggregate of a plurality of cohesive particles. Fig. 2 shows a schematic cross-sectional view in a direction vertical to a longitudinal direction of an adhesive article in one configuration example of a linear adhesive article having a core material as a support.

In a linear adhesive article 2 shown in Fig. 2, a layer containing an aggregate of a plurality of cohesive particles 5 (cohesive particle layer) covers the surface (surface in longitudinal direction) of a linear core material 4 as a support. A plurality of the cohesive aggregates 5 each have a core-shell structure including an adhesive core 51 and a non-adhesive shell 52 covering the core 51.

In the linear adhesive article, the cohesive particle layer may cover the entire surface (surface in longitudinal direction) of the core material, but may cover only a part of the surface of the core material. The cohesive particle layer is typically continuously formed, but is not limited to this embodiment. For example, the cohesive particle layer may be formed regularly such as a dot shape or a stripe shape or in a random pattern. The edge of the core material may be covered or may not be covered with the cohesive particle layer. For example, when the linear adhesive article is cut and used, the edge of the core material may not be covered with the cohesive particle layer.

The core material used in the linear adhesive article is not particularly limited so long as it does not disturb stretching of the adhesive article, but a core material composed of a material that is stretchable by itself is preferred. For example, a resin, a rubber, a foam, an inorganic fiber and composites of those can be used. Examples of the resin include polyolefins such as polyethylene (PE), polypropylene (PP), an ethylene-propylene copolymer and an ethylene-vinyl acetate copolymer; polyesters such as polyethylene terephthalate (PET); vinyl chloride resins; vinyl acetate resins; polyimide resins; polyamide resins; and fluoride resins. Examples of the rubber include natural rubber and synthetic rubbers such as polyurethane. Examples of the foam include foamed polyurethane and foamed polychloroprene rubber. Examples of the fiber include glass fibers, carbon fibers and metal fibers. The cross-sectional shape of the core material is not particularly limited, but generally has a cross-sectional shape according the cross-sectional shape of the core material.

As material of the core material that can be used in a yarnlike adhesive article, various polymer materials such as rayon, cupra, acetate, promix, nylon, aramide, vinylon, vinylidene, polyvinyl chloride, polyester, acryl, polyethylene, polypropylene, polyurethane, polychlal and polylactic acid; glasses; carbon fibers; various rubbers such as natural rubber and synthetic rubbers such as urethane rubber; natural materials such as cotton and wool; and metals can be used. As the form of the yarnlike core material, for example, monofilaments, multifilaments, span yarns, finished yarns generally called textured yarn, bulky yarn and stretched yarn that have been subjected to crimping or bulking or combined yarns obtained by, for example, twisting those can be used. The cross-sectional shape is not limited to only a circle, but can be a short shape such as a square shape or a star shape, an elliptical shape, a hollow shape and the like.

The core material may contain various additives generally added to a substrate that can be used in a sheet-shaped adhesive article, and may be subjected to various surface treatments that can be applied to a substrate used in a sheet-shaped adhesive article.

The size of the cross-section of the core material is not particularly limited and can be selected according to the purpose. For example, when the cross-sectional shape is a circle, its diameter is preferably 1 to 2000 $\mu$m and more preferably 10 to 1000 $\mu$m, from the standpoint of handling properties (easy to stretch and difficult to cut).

In the case of the linear adhesive article having a core material as shown in Fig. 2, the thickness of the cohesive particle layer is not particularly limited, but is, for example, preferably 1 $\mu$m or more and more preferably 3 $\mu$m or more, from the standpoint of adhesiveness. On the other hand, the thickness is, for example, preferably 200 $\mu$m or less and more preferably 150 $\mu$m or less, from the standpoint of drying properties.

The layer containing an aggregate of a plurality of cohesive particles (cohesive particle layer) may be directly provided on the surface of the core material, but may be provided thereon through an adhesive layer. As the adhesive constituting the adhesive layer, same adhesive as the adhesive that can be used in the sheet-shaped adhesive article can be used.

In the present description, the term that the linear adhesive article in the initial state (before stretching) "does not substantially have adhesiveness (is substantially non-adhesive)" indicates that a tack value on the surface of the adhesive article measured by the following probe tack test 3 is 2 gf or less. Furthermore, the term that the linear adhesive article in the initial state (before stretching) "has adhesiveness" indicates that a tack value of the surface of the adhesive article measured by the following probe tack test 3 exceeds 2 gf. More specifically, the tack value is measured under the conditions that the diameter of a stainless steel probe is changed to 2 mm in the probe tack measurement method of the sheet-shaped adhesive article described in the column of examples described hereinafter.

(Probe tack test 3)

After a stainless steel probe (SUS304) having a dimeter of 2 mm has been brought into contact with the surface of the adhesive article with a contact load of 50 gf under an environment of measurement temperature of 23°C, a load applied to the probe when separating 1 mm in a rate of 30 mm/min is measured with time, and a maximum load required when peeling is obtained.

In the present description, the term that the linear adhesive article after stretching "does not substantially have adhesiveness (is substantially non-adhesive)" indicates that a tack value on the surface of the adhesive article measured by the following probe tack test 4 is 2 gf or less. Furthermore, the term that the linear adhesive article after stretching "has adhesiveness" indicates that a tack value on the surface of the adhesive article measured by the following probe tack test 4 exceeds 2 gf. More specifically, the tack value is measured under the conditions that the diameter of a stainless steel probe was changed to 2 mm in the probe tack measurement method of the sheet-shaped adhesive article described in the column of examples described hereinafter.

(Probe tack test 4)

After the adhesive article has been stretched in a lengthwise direction and then a stainless steel probe (SUS304) having a dimeter of 2 mm has been brought into contact with the surface of the adhesive article with a contact load of 50 gf under an environment of measurement temperature of 23°C, a load applied to the probe when separating 1 mm in a rate of 30 mm/min is measured with time, and a maximum load required when peeling is obtained.

The term that the adhesive article "expresses adhesiveness by stretching" indicates that the adhesive article is substantially non-adhesive in the initial state before stretching and has adhesiveness after stretching.

In order that the expression of adhesiveness by stretching is better exhibited, the tack value after stretching to twice of the linear adhesive article is preferably 1 gf or more larger than the tack value before stretching, more preferably 1.5 gf or more larger than the tack value before stretching, and still more preferably 2 gf or more larger than the tack value before stretching.

From the same standpoint, the tack value after stretching to twice of the linear adhesive article is preferably 1 gf or more, more preferably 1.5 gf or more and still more preferably 2 gf or more. The upper limit of the tack value after stretching to twice is not particularly limited, but is, for example, 100 gf or less from the standpoint of the balance with shear adhesive force.

The adhesive article of this embodiment has a linear shape and therefore can be stuck on a narrow member and narrow region while suppressing protrusion. Furthermore, the adhesive article is preferable in easy break-down (rework). For example, the adhesive article can be applied to fixation of a narrow frame of a portable terminal such as a mobile phone or a smart phone.

In addition, according to the adhesive article of this embodiment, since it is linear, it can be adhered to the surface of a narrow gap and can fill the gap, by expressing adhesiveness by stretching it after entering into the gap.

Furthermore, the adhesive article of this embodiment preferably has flexibility and is particularly preferably a yarnlike adhesive article that can bend in various directions and at various angles like a yarn. Such flexible adhesive article, particularly a yarnlike adhesive article, has the advantages that the adhesive article is easy to be applied to complicated shapes such as a curved line, a curved surface and unevenness, in addition to the effects described above.

For example, in the case where an adhesive tape is tried to stick on an adherend having a complicatedly shaped portion such as a curved line, a curved surface and unevenness, an wrinkle or overlap occur on such portion and it is difficult to stick the adhesive tape beautifully while suppressing protrusions. Furthermore, the portion at which the wrinkle or overlap occurred may become a factor of decreasing adhesive force. In order to stick the adhesive tape such that wrinkle and overlap do not occur, it may be considered to cut the adhesive tape finely and stuck the same, but this greatly deteriorates workability. On the other hand, a flexible adhesive article, particularly a yarnlike adhesive article, can be strongly stuck on complicatedly shaped portion such as a curved line, a curved surface and unevenness without occurrence of wrinkle and overlap. Furthermore, the adhesive article can be stuck to the desired part at one time, that is, by one step, and therefore has excellent workability and can be applied to automated line.

One example of specific uses of the yarnlike adhesive article is a use for fixing cables such as electric wire and optical fiber, optical fiber sensors such as LED fiber light and FBG (Fiber Bragging Gratings), various wire materials (linear members) such as a yarn, a string and a wire and narrow members, in a desired form. For example, even in the case of fixing a wire material or a narrow member to other members in a complicated shape, if the yarnlike adhesive article is used, the adhesive article can be strongly fixed to other members according to the complicated shape that a wire material and a narrow member have, with excellent workability while suppressing protrusions, wrinkles and overlaps. In the case of fixing a wire material and a narrow member to another member, after the yarnlike adhesive article has been previously stuck on the surface of another member according to the form that wire material and narrow member are fixed thereto, the wire material and narrow member can be stuck according to the adhesive article stuck on the surface of another member and then fixed thereto. Alternatively, after sticking the yarnlike adhesive article to the wire material and narrow member, the wire material and narrow member may be fixed to another member in a desired form.

Furthermore, the yarnlike adhesive article can be suitably used in uses of prefixing (temporary tacking) of an article for prefixing (temporarily tacking) one article to the surface of another article. More specifically, the yarnlike adhesive article is particularly suitably applied to uses of prefixing (temporary tacking) when producing textile products, leather products and the like such as clothes, shoes, bags and hats. However, the uses are not limited to those, and the yarn-shape adhesive article is suitably used in various uses in which prefixing (temporary tacking) is desired.

For example, when one article is fixed to the surface of another article, one article is previously prefixed to the surface of another article using the yarnlike adhesive article, followed by positioning, and both articles are then fixed (actually fixed) to each other by a fixation method such as thermocompression bonding or sewing. In this case, a yarnlike adhesive article makes it easy to prefix while avoiding a fixed part provided between both articles. For example, in the case of sewing textile products and leather products, by conducting prefixation using the yarnlike adhesive article, the prefixation can be easily conducted while avoiding a sewing part and sticking of an adhesive to a needle can be easily prevented.

Furthermore, if the yarnlike adhesive article is used, even when both articles have complicated shape such as a curved line, a curved surface or unevenness as described above, both articles can be well stuck to each other while suppressing protrusions, wrinkles and overlaps. Additionally, both articles can be stuck to each other in one step, and workability is good.

Furthermore, for example, even in deformable members such as a texture, a cloth and a leather that constitute textile products and leather products, deformation of the members by pulling can be suppressed or prevented by conducting prefixation by the yarnlike adhesive article, and designability after fixing (actual fixing) is better.

Furthermore, the yarnlike adhesive article can be easily extracted and removed from a space between both articles that were fixed (actually fixed) as necessary after fixation (actual fixation) of both articles. This can prevent protrusions of an adhesive and can well prevent deterioration of designability derived from discoloration with time of a residual adhesive.

Furthermore, the yarnlike adhesive article can be twisted with a yarn made of other material to form a composite yarn or can be woven with a yarn or cloth (including nonwoven fabric and sheet) made of other material, thereby function combination can be attempted.

A method for forming the adhesive article of this embodiment is not particularly limited. In forming a sheet-shaped adhesive article, for example, a method of directly applying a dispersion of the core-shell polymers (cohesive particles) to a releasable or non-releasable substrate, followed by heat drying (direct method) can appropriately be used. The application of the dispersion can be conducted using the conventional coater such as gravure roll coater, reverse roll coater, kiss roll coater, dip roll coater, bar coater, knife coater or spray coater. The heat drying temperature can be appropriately selected, and is preferably 40 to 200°C, more preferably 50 to 180°C and particularly preferably 70 to 120°C. As the drying time, appropriate time can be used. The drying time is preferably 5 seconds to 20 minutes, more preferably 5 seconds to 10 minutes and particularly preferably 10 seconds to 5 minutes.

In forming the linear adhesive article, for example, a method of applying the dispersion to a linear core material by dipping, followed by heat drying (dipping) can be appropriately used. As the heat drying conditions, the same conditions as the conditions when forming the sheet-shaped adhesive article can be appropriately used.

Examples

The present invention is specifically described below by examples, but the invention is not construed as being limited to those examples.

(Example 1)

260 parts by weight of ion-exchanged water, 130 parts by weight of n-butyl acrylate (BA), 0.13 parts by weight of lauryl mercaptan (chain transfer agent) and 10 parts by weight of an emulsifier (trade name "LATEMUL E-118B" manufactured by Kao Corporation) were placed in a vessel, and stirred for 5 minutes in 6000 rpm in nitrogen atmosphere using a homomixer (manufactured by Tokushu Kika Kogyo Co., Ltd.). Thus, a monomer emulsion (A) was prepared.

350 parts by weight of the monomer emulsion (A) were mixed with 0.34 parts by weight of ammonium persulfate as a water-soluble azo polymerization initiator in a reaction vessel equipped with a reflux condenser, a nitrogen introduction pipe, a thermometer, a dropping equipment and a stirrer, and an emulsion polymerization reaction (batch polymerization) was conducted at 75°C for 3 hours while stirring. Thus, a copolymer for forming a core was obtained. A monomer mixture (A) of 29 parts by weight of methyl methacrylate (MMA) and 5.8 parts by weight of acrylic acid (AA) was added dropwise over 10 minutes, and a reaction was then conducted at 75°C for 3 hours. After cooling the reaction liquid to 30°C, 10 wt% ammonia aqueous solution was added to the reaction liquid and pH was adjusted to 8. Thus, an aqueous dispersion (1) of copolymer particles having a core-shell structure was obtained.

The aqueous dispersion (1) of the copolymer particles having a core-shell structure was applied to a release film (polyethylene terephthalate substrate, trade name: DIAFORM MRF-38, manufactured by Mitsubishi Chemical Polyester Co., Ltd.) by an applicator with a thickness after drying of 40 $\mu$m, followed by drying at 130°C for 2 minutes. Thus, an evaluation sample of Example 1 was obtained. A size of the evaluation sample was width: 3 cm and length: 6 cm.

(Comparative Example 1)

100 parts by weight of 2-ethylhexyl acrylate (2EHA), 1.5 parts by weight (solids content) of AQUALON HS-1025 (manufactured by DKS Co., Ltd.) as an anionic reactive surfactant and 82 parts by weight of ion-exchanged water were placed in a vessel, and stirred for 5 minutes in 6000 rpm in nitrogen atmosphere using a homomixer (manufactured by Tokushu Kika Kogyo Co., Ltd.). Thus, a monomer emulsion (B) was prepared.

80 parts by weight of methyl methacrylate (MMA), 10 parts by weight of butyl acrylate (BA), 5 parts by weight of acrylic acid (AA), 5 parts by weight of methacrylic acid (MAA), 1.5 parts by weight (solids content) of AQUALON HS-1025 (manufactured by DKS Co., Ltd.) as an anionic reactive surfactant and 82 parts by weight of ion-exchanged water were placed in another vessel, and stirred for 5 minutes in 6000 rpm in nitrogen atmosphere using a homomixer (manufactured by Tokushu Kika Kogyo Co., Ltd.). Thus, a monomer emulsion (C) was prepared.

0.5 parts by weight (solids content) of AQUALON HS-1025 (manufactured by DKS Co., Ltd.) as an anionic reactive surfactant and 76.8 parts by weight of ion-exchanged water were placed in a reaction vessel equipped with a reflux condenser, a nitrogen introduction pipe, a thermometer, a dropping equipment and a stirrer, and after sufficiently substituting with nitrogen while stirring, the reaction liquid was heated to 60°C. After confirming that the temperature of the reaction mixture became constant at 60°C, 0.05 parts by weight of VA-057 (manufactured Wako Pure Chemical Industries, Ltd., compound name: 2,2'-bis[N-(2-carboxyethyl)-2-methylpropione amidine] hydrate) as a water-soluble azo polymerization initiator were added, and 10 minutes later, 150.6 parts by weight of the monomer emulsion (B) were added dropwise over 2.5 hours. Thus, a copolymer for forming a core was obtained. 0.05 parts by weight of VA-057 were further added, and 10 minutes later, 37.6 parts by weight of the monomer emulsion (C) were added dropwise over 45 minutes, followed by stirring at 60°C for 3 hours. Thus, a copolymer for forming a shell was formed. After cooling the reaction liquid to 30°C, 10 wt% ammonia aqueous solution was added to adjust pH to 8. Thus, an aqueous dispersion (2) of the copolymer particles having a core-shell structure was obtained.

The aqueous dispersion (2) of the copolymer particles having a core-shell structure was applied to a release film (polyethylene terephthalate substrate, trade name: DIAFORM MRF-38, manufactured by Mitsubishi Chemical Polyester Co., Ltd.) by an applicator with a thickness after drying of 40 $\mu$m, followed by drying at 130°C for 2 minutes. Thus, an evaluation sample of Comparative Example 1 was obtained. A size of the evaluation sample was width: 3 cm and length: 6 cm.

(Comparative Example 2)

40 parts by weight of ion-exchanged water were placed in a reaction vessel equipped with a cooling tube, a nitrogen induction pipe, a thermometer, a dropping equipment and a stirrer, and nitrogen substitution was conducted by stirring at 60°C for 1 hour or more while introducing nitrogen gas. 0.1 parts by weight of 2,2'-azobis[N-(2-carboxyethyl)-2-methyl propionamide] n hydrate (polymerization initiator) were added to the reaction vessel. While maintaining the system at 60°C, the following emulsion (D) was gradually added dropwise to the system, thereby proceeding an emulsion polymerization reaction. The monomer emulsion (D) was an emulsion obtained by adding 98 parts by weight of 2-ethylhexyl acrylate, 1.25 parts by weight of acrylic acid, 0.75 parts by weight of methacrylic acid, 0.05 parts by weight of lauryl mercaptan (chain transfer agent), 0.02 parts by weight of $\gamma$-methacyloxypropyl trimethoxysilane (manufactured

by Shin-Etsu Chemical Co., Ltd., trade name: KBM-003) and 2 parts by weight of polyoxyethylene lauryl sodium sulfate (emulsifier) to 30 parts by weight of ion-exchanged water and emulsifying the same.

After completion of dropwise addition of the monomer emulsion (D), the system was further maintained at 60°C for 3 hours and then cooled to room temperature. 10 wt% ammonia water was added to the system to adjust pH to 7. Thus, an acrylic copolymer emulsion (aqueous dispersion type acrylic polymer) was obtained.

Subsequently, 20 parts of a tackifying resin emulsion (manufactured by Arakawa Chemical Industries, Ltd., trade name "E-865NT") on solids basis per 100 parts of the acrylic polymer contained in the acrylic polymer emulsion were added. The pH was adjusted to 7.2 and the viscosity was adjusted to 10 Pa·s, using 10wt% ammonia water as a pH regulator and polyacrylic acid (manufactured by Toagosei Co., Ltd., trade name "ARON B-500") as a thickener. Thus, an aqueous dispersion type acrylic adhesive composition was obtained.

The aqueous dispersion type acrylic adhesive composition was applied to a release film (polyethylene terephthalate substrate, trade name: DIAFORM MRF-38, manufactured by Mitsubishi Chemical Polyester Co., Ltd.) by an applicator with a thickness after drying of 40 $\mu$m, followed by drying at 130°C for 2 minutes. Thus, an evaluation sample of Comparative Example 2 was obtained. A size of the evaluation sample was width: 3 cm and length: 6 cm.

(Comparative Example 3)

273 parts by weight of water, 138 parts by weight of n-butyl acrylate (BA), 35 parts by weight of methyl methacrylate (MMA), 3.5 parts by weight of acrylic acid (AA), 0.17 parts by weight of lauryl mercaptan and 13 parts by weight of an emulsifier (trade name "LATEMUL-118B" manufactured by Kao Corporation) were placed in a vessel, and stirred for 5 minutes in 6000 rpm in nitrogen atmosphere using a homomixer (manufactured by Tokushu Kika Kogyo Co., Ltd.). Thus, a monomer emulsion (E) was prepared.

450 parts by weight of the monomer emulsion (E) were mixed with 0.47 parts by weight of a water-soluble azo polymerization initiator (ammonium persulfate) in a reaction vessel equipped with a reflux condenser, a nitrogen introduction pipe, a thermometer, a dropping equipment and a stirrer, and an emulsion polymerization reaction (batch polymerization) was conducted at 75°C for 6 hours while stirring. After cooling the reaction liquid to 30°C, 10 wt% ammonia aqueous solution was added to the reaction liquid and pH was adjusted to 8. Thus, an acrylic polymer emulsion (water dispersion type acrylic polymer) was obtained.

The acrylic polymer dispersion was applied to a release film (polyethylene terephthalate substrate, trade name: DIAFORM MRF-38, manufactured by Mitsubishi Chemical Polyester Co., Ltd.) by an applicator with a thickness after drying of 40 $\mu$m, followed by drying at 130°C for 2 minutes. Thus, an evaluation sample of Comparative Example 3 was obtained. A size of the evaluation sample was width: 3 cm and length: 6 cm.

(Comparative Example 4)

ARONTACK TT-1214 (manufactured by Toagosei Co., Ltd.) as a heat-sensitive adhesive composition was applied to a release film (polyethylene terephthalate substrate, trade name: DIAFORM MRF-38, manufactured by Mitsubishi Chemical Polyester Co., Ltd.) by an applicator with a thickness after drying of 40 $\mu$m, followed by drying at 60°C for 5 minutes. Thus, an evaluation sample of Comparative Example 4 was obtained. A size of the evaluation sample was width: 3 cm and length: 6 cm.

[Measurement of tack value in initial state (before stretching)]

After peeling the release film from the evaluation sample of each example, the one surface was stuck to a slide glass manufactured by Matsunami Glass Ind., Ltd. using a double-sided adhesive tape "No. 5000N" manufactured by Nitto Denko Corporation (thickness: 0.16 mm). Thus, a test piece was prepared.

The test piece prepared was subjected to a probe tack test using a probe tack measuring device (TACKINESS TESTER Model TAC-II manufactured by RHESCA).

Specifically, after a stainless steel probe (SUS304) having a dimeter of 5 mm was brought into contact with the surface at the evaluation sample side of the test piece with a contact load of 50 gf under an environment of measurement temperature of 23°C, a load applied to the probe when separating 1 mm in a rate of 30 mm/min was measured with time, and a maximum load required when peeling was obtained an was defined as a tack value A (gf) in the initial state (before stretching).

When the tack value measured by the probe tack test is 5 gf or less, it is evaluated as "not substantially have adhesiveness (is substantially non-adhesive)".

[Measurement of tack value after stretching]

After the release film was peeled from the evaluation sample of each example and the sample was stretched to twice in a lengthwise direction, the one surface was stuck to a slide glass manufactured by Matsunami Glass Industry Co., Ltd. using a double-sided adhesive tape "No. 5000N" (thickness: 0.16 mm) manufactured by Nitto Denko Corporation. Thus, a test piece was prepared.

The test piece prepared was subjected to a probe tack test in the same test manner and under the same conditions, as in the tack value A in the initial state (before stretching), and a tack value B (gf) after stretching to twice was measured.

Measurement results of the tack value A in the initial state (before stretching) and the tack value B after stretching to twice of the evaluation example of each example are shown in Table 1. Additionally, the evaluation results of the difference (B-A) between the tack value B after stretching to twice and the tack value A in the initial state (before stretching) are shown.

TABLE 1

|  | Ex. 1 | Com. Ex. 1 | Com. Ex. 2 | Com. Ex. 3 | Com. Ex. 4 |
|---|---|---|---|---|---|
| Tack value A (gf) in initial state (before stretching) | 0.4 | 114 | 500 | 408 | 191 |
| Tack value B (gf) after stretching to twice | 66 | 91 | 430 | 170 | Impossible to stretch (break before stretching to twice) |
| B-A (gf) | 65.6 | -23 | -70 | -238 | - |

According to the sample of Example 1, the tack value was low as 0.4 gf in the initial state and was substantially non-adhesive, while the tack value was increased to 66 gf after stretching to twice, and it exerts adhesiveness by stretching.

On the other hand, the samples of Comparative Examples 1 to 3 had adhesiveness in the initial state, had the tack value after stretching to twice lower than the tack value in the initial state and did not express adhesiveness by stretching.

The sample of Comparative Example 4 had adhesiveness in the initial state, was broken before stretching to twice and did not express adhesiveness by stretching

Although various embodiments have been described above by reference to the drawings, it is needless to say that the present invention is not limited to those examples. It is apparent to one skilled in the art that various modifications or changes can be made within the scope of the claims, and it is understood that those modifications and changes belong to the technical scope of the present invention. Furthermore, each structural element in the above embodiments may be arbitrarily combined within a range that does not deviate the gist of the invention.

This application is based on Japanese Patent Application No. 2017-192138 filed September 29, 2017, and Japanese Patent Application No. 2018-181177 filed September 27, 2018, the disclosures of which are incorporated herein by reference.

REFERENCE SIGNS LIST

1, 2: Adhesive article
3: Substrate
4: Core material
5: Cohesive particle
51: Core
52: Shell

Claims

1. An adhesive article which expresses adhesiveness by stretching,

wherein the adhesive article comprises an aggregate of a plurality of cohesive particles, and
wherein each of the plurality of cohesive particles is a polymer particle having a core-shell structure comprising an adhesive core and a non-adhesive shell covering the core.

2. The adhesive article according to claim 1, having a sheet shape.

3. The adhesive article according to claim 2, further comprising a substrate,
wherein a layer comprising the aggregate of the plurality of cohesive particles is provided on at least one surface of the substrate.

4. The adhesive article according to claim 2 or 3, wherein a tack value of the adhesive article after stretching to twice measured by the following probe tack test 2 is 20 gf or more larger than a tack value before stretching measured by the following probe tack test 1.

(Probe tack test 1)
After a stainless steel probe (SUS304) having a dimeter of 5 mm has been brought into contact with the surface of the adhesive article with a contact load of 50 gf under an environment of measurement temperature of 23°C, a load applied to the probe when separating 1 mm in a rate of 30 mm/min is measured with time, and a maximum load required when peeling is obtained.
(Probe tack test 2)
After the adhesive article has been stretched in a lengthwise direction and then a stainless steel probe (SUS304) having a dimeter of 5 mm has been brought into contact with the surface of the adhesive article with a contact load of 50 gf under an environment of measurement temperature of 23°C, a load applied to the probe when separating 1 mm in a rate of 30 mm/min is measured with time, and a maximum load required when peeling is obtained.

5. The adhesive article according to claim 1, having a linear shape.

6. The adhesive article according to claim 5, further comprising a linear core material,
wherein a surface in a longitudinal direction of the core material is covered with a layer comprising the aggregate of the plurality of cohesive particles.

7. The adhesive article according to claim 5 or 6, wherein a tack value of the adhesive article after stretching to twice measured by the following probe tack test 4 is 1 gf or more larger than a tack value before stretching measured by the following probe tack test 3:

(Probe tack test 3)
After a stainless steel probe (SUS304) having a dimeter of 2 mm has been brought into contact with the surface of the adhesive article with a contact load of 50 gf under an environment of measurement temperature of 23°C, a load applied to the probe when separating 1 mm in a rate of 30 mm/min is measured with time, and a maximum load required when peeling is obtained.
(Probe tack test 4)
After the adhesive article has been stretched in a lengthwise direction and then a stainless steel probe (SUS304) having a dimeter of 2 mm has been brought into contact with the surface of the adhesive article with a contact load of 50 gf under an environment of measurement temperature of 23°C, a load applied to the probe when separating 1 mm in a rate of 30 mm/min is measured with time, and a maximum load required when peeling is obtained.

FIG. 1

FIG. 2

## INTERNATIONAL SEARCH REPORT

| International application No. |
|---|
| PCT/JP2018/036041 |

A. CLASSIFICATION OF SUBJECT MATTER
Int. Cl. C09J7/00(2018.01)i, C09J201/00(2006.01)i

According to International Patent Classification (IPC) or to both national classification and IPC

B. FIELDS SEARCHED

Minimum documentation searched (classification system followed by classification symbols)
Int. Cl. C09J7/00, C09J201/00

Documentation searched other than minimum documentation to the extent that such documents are included in the fields searched
Published examined utility model applications of Japan      1922-1996
Published unexamined utility model applications of Japan    1971-2018
Registered utility model specifications of Japan            1996-2018
Published registered utility model applications of Japan    1994-2018

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 02-102280 A (MATSUMOTO YUSHI SEIYAKU KK) 13 April 1990, claims (Family: none) | 1-7 |
| A | JP 02-238078 A (SANYO CHEMICAL INDUSTRIES, LTD.) 20 September 1990, claims (Family: none) | 1-7 |
| A | JP 60-124679 A (NIPPON OXYGEN CO., LTD.) 03 July 1985, claims (Family: none) | 1-7 |
| A | JP 08-507567 A (MINNESOTA MINING AND MANUFACTURING CO.) 13 August 1996, claims & US 5599618 A, claims & WO 1994/020585 A1 & EP 688352 A1 & TW 340868 B | 1-7 |

☒ Further documents are listed in the continuation of Box C.   ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 06.11.2018 | 20.11.2018 |

| Name and mailing address of the ISA/ Japan Patent Office 3-4-3, Kasumigaseki, Chiyoda-ku, Tokyo 100-8915, Japan | Authorized officer |
|---|---|
| | Telephone No. |

Form PCT/ISA/210 (second sheet) (January 2015)

**INTERNATIONAL SEARCH REPORT**

| International application No. |
| --- |
| PCT/JP2018/036041 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2004-508449 A (APPLETON PAPERS INC.) 18 March 2004, claims & US 2002/0169233 A1, claims & WO 2002/020683 A2 & EP 1360069 A2 & CN 1427771 A & KR 10-2004-0030405 A | 1-7 |
| A | JP 2015-151479 A (FUJIFILM CORP.) 24 August 2015, claims & US 2016/0326400 A1, claims & WO 2015/122220 A1 & TW 201533188 A | 1-7 |
| A | Microfilm of the specification and drawings annexed to the request of Japanese Utility Model Application No. 113494/1971 (Laid-open No. 067061/1973) (SHOWA ELECTRIC WIRE AND CABLE CO., LTD.) 25 August 1973, pages 3, 4 (Family: none) | 1-7 |
| A | JP 38-028672 Y1 (AOYAMA, Yoshirou) 25 December 1963, entire text (Family: none) | 1-7 |
| A | JP 2000-290603 A (NITTO DENKO CORP.) 17 October 2000, claims (Family: none) | 1-7 |
| A | JP 01-308471 A (NITTO DENKO CORP.) 13 December 1989, claims (Family: none) | 1-7 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10231464 A
- JP 2017192138 A
- JP 2018181177 A